# EUROPÄISCHE PATENTSCHRIFT

(11) **EP 3 745 217 B1**
(45) Veröffentlichungstag und Bekanntmachung des Hinweises auf die Patenterteilung: **10.08.2022**
(21) Anmeldenummer: 20187162.1
(22) Anmeldetag: 03.02.2017
(51) Int. Cl.: G05B 9/02, G05B 19/042

(54) **VORRICHTUNG ZUM ÜBERWACHEN EINER DATENVERARBEITUNG UND - ÜBERTRAGUNG IN EINEM SICHERHEITSSYSTEMS**
DEVICE FOR MONITORING THE DATA PROCESSING AND DATA TRANSMISSION IN A SAFETY SYSTEM
DISPOSITIF DE SURVEILLANCE D' UN SYSTÈME DE TRAITEMENT ET DE TRANSMISSION DE DONNÉES.

(30) Priorität: 10.02.2016 DE 102016102282
(43) Veröffentlichungstag der Anmeldung: 02.12.2020
(62) Teilanmeldung aus: 17703144.0
(73) Patentinhaber: Phoenix Contact GmbH & Co. KG, 32825 Blomberg (DE)
(72) Erfinder: RAHLVES, Lutz, 30853 Langenhagen (DE)
(74) Vertreter: Blumbach · Zinngrebe Patentanwälte PartG mbB

(56) Entgegenhaltungen:
- DE-A1-102008 044 018
- US-A1- 2005 027 379

## Beschreibung

Die vorliegende Erfindung betrifft eine Vorrichtung zur Durchführung eines Verfahrens zum Überwachen einer Datenverarbeitung und -übertragung in einer Sicherheitskette (im engl. safety chain, gegebenenfalls auch safety loop, auch wenn die Kette keine Schleife bildet oder bilden muss) eines Sicherheitssystems. Das Sicherheitssystem stellt dabei eine

Gesamtsicherheitsfunktion bereit und ist aus wenigstens zwei Teilsystem-Modulen modular aufgebaut, wobei wenigstens die zwei Teilsystem-Module an einen Datenübertragungskanal angeschaltet sind und jeweils eine Teilsicherheitsfunktion bereitstellen und für eine funktional sichere Datenverarbeitung und/oder -übertragung ausgebildet sind. Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den Sicheren Zustand nach Erkennen eines Fehlers. Hier werden zunehmend fehlersichere Automatisierungssysteme innerhalb der automatisierten Prozesse, Maschinen und Anlagen eingesetzt. Im Allgemeinen realisieren diese fehlersicheren Automatisierungssysteme einerseits die eigentliche Sicherheitsfunktion (wie z.B. Not-Aus, Zweihand-Schaltung, Betriebsartenwahlschalter, ...), und andererseits auch fehlererkennende und -beherrschende Maßnahmen nach z.B. in Standards (IEC 61508, ISO 13849, ...) festgelegten Mechanismen, welche dem aktuellen Stand der Technik entsprechen.

Hierbei betrifft der Begriff "Sicherheit" im Rahmen der Erfindung sowie in der Beschreibung und den Ansprüchen, soweit nicht anderes angegeben ist, die funktionale Sicherheit (im engl. auch als safe/safety bezeichnet; in Abgrenzung zu secure/security für eine elektrische Sicherheit oder auch den Schutz der technischen Verarbeitung von Informationen zur Verhinderung nichtautorisierter Datenmanipulationen oder Preisgabe von Informationen).

In der internationalen Norm IEC 61508 bzw. in der im Wesentlichen inhaltsgleichen Europäischen Norm EN 61508 werden funktional sichere elektrische, elektronische und programmierbar elektronische Systeme unter anderem auch hinsichtlich deren Entwicklung beschrieben. Die darin vorgegebenen Anforderungen an den Entwicklungsprozess von sicheren Systemen führen zu signifikant höherem Aufwand und benötigtem Entwicklungsbudget im Vergleich zur Entwicklung von Standardsystemen. Dabei nehmen die Anforderungen mit zunehmendem Sicherheitsintegritätslevel (SIL; SIL1 bis SIL4) zu. Mit dem Begriff "Sicherheitsintegritätslevel" (oder auch Sicherheitsanforderungsstufe) wird über den jeweiligen Level ein bestimmtes Maß für die notwendige bzw. erreichte Wirksamkeit von Sicherheitsfunktionen zur Risikominderung definiert. Wenn keine sicherheitsgerichteten (auch als sicherheitsbezogen oder sicherheitsrelevant bezeichnet) Anforderungen gelten, so ist die Entwicklung nach den normalen Standards des betrieblichen Qualitätsmanagements durchzuführen. Darüber hinaus stellt der Sicherheitsintegritätslevel SIL1 die geringsten Anforderungen. Je höher der Sicherheitsintegritätslevel, desto höher sind auch die Anforderungen an die Sicherheit.

Die funktionale Sicherheit gemäß der Norm IEC 61508 umfasst z.B. die Anwendung diverser Methoden zur Beherrschung von Fehlern, wie bspw. die Vermeidung systematischer Fehler in der Entwicklung, die Überwachung im laufenden Betrieb zur Erkennung von zufälligen Fehlern und/oder die sichere Beherrschung von erkannten Fehlern und den Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette (im engl. safety chain, gegebenenfalls auch safety loop, auch wenn die Kette keine Schleife bildet oder bilden muss)) bezeichnet, angefangen z.B. von der Anforderung einer Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Ist durch geeignete Maßnahmen somit gewährleistet, dass ein elektrisches, elektronisches und/oder programmierbar System, aber auch ein einzelnes Teilsystem-Modul oder auch eine einzelne Hardware- und/oder Software-Komponente eine bestimmte Sicherheitsfunktion wirksam erfüllt, gilt dieses System bzw. das jeweilige Teilsystem-Modul im Rahmen der nachfolgenden Beschreibung und der Ansprüche als sicher oder sicherheitsgerichtet. Ein System, dass bestimmte Sicherheitsfunktionen erfüllen soll und hierbei aus einer Vielzahl von Teilsystem-Modulen, d.h. von wenigstens zwei oder mehr als zwei Teilsystem-Modulen, aufgebaut ist, welche jeweils für sich wiederum Sicherheitsfunktionen (Teilsicherheitsfunktionen) erfüllen sollen, gilt im Rahmen der Erfindung als Sicherheitssystem.

In aktuellen Maschinen und Anlagen werden abhängig von der Ausdehnung der Anlagen und vom Automatisierungsgrad Kommunikationssysteme (oder auch Datenübertragungssysteme), wie z.B. Ethernet-basierte Netzwerke oder Feldbusse, verwendet, die dezentrale E/A-Geräte (Eingabe-/Ausgabe-Geräte, wie z.B. Sensoren bzw. Aktoren) und Steuerungen verbinden. Für die Übertragung von sicherheitsrelevanten Daten werden in der Regel sichere Kommunikationsprotokolle (oder auch Datenübertragungsprotokolle bzw. Netzwerkprotokolle) benutzt. Sichere Kommunikationsprotokolle sind heutzutage standardisiert, z.B. in der IEC 61784-3. Dort werden basierend auf Grundsätzen der sicheren Netzwerkkommunikation unterschiedliche Sicherheitsprofile beschrieben. Alle diese Netzwerkprotokolle müssen die unterschiedlichen Fehlermodelle, wie z.B. Verfälschung, Verlust, Verzögerung, Vertauschung und so weiter von Daten und/oder Telegrammen, beherrschen.

Die Wirksamkeit der risikominimierenden technischen Maßnahmen in Maschinen und/oder Anlagen muss während der Inbetriebnahme einer Maschine oder Anlage durch eine Gesamtsicherheitsvalidierung nachgewiesen und protokolliert bzw. dokumentiert werden. Hierbei müssen alle Sicherheitsfunktionen vor Übergang in die Betriebsphase der Maschine oder Anlage in ihrer Wirksamkeit überprüft werden. Dies ist bei einer vollständigen und nicht veränderten Maschine oder Anlage noch überschaubar, wird allerdings in zunehmend häufiger vorkommenden modularen Maschinen oder Anlagen immer aufwändiger und komplexer.

Wird darüber hinaus eine Vielzahl von Maschinen und/oder Anlagen innerhalb eines Systems eingesetzt, welche auch Sicherheitsfunktionen zusammenwirkend realisieren müssen, bilden diese im Rahmen der Erfindung Teilsystem-Module des Systems, welches dann aus der Vielzahl dieser Teilsystem-Module zusammen ein Sicherheitssystem oder auch mehrere Sicherheitssysteme ausbildet. Hier muss demnach die Wirksamkeit der risikominimierenden technischen Maßnahmen durch eine Gesamtsicherheitsvalidierung des die beteiligten Teilsystem-Module übergreifenden Sicherheitssystems nachgewiesen werden. Als Beispiel für ein solches Sicherheitssystem sei eine Stanzanlage genannt, welche aus einer Zuführmaschine, einer Stanzmaschine und einer Auswurfmaschine gebildet ist, die alle drei bestimmte Sicherheitsfunktionen realisieren müssen, wobei auch die Stanzanlage insgesamt als zu betrachtendes Sicherheitssystem, d.h. beim Zusammenwirken der einzelnen Teilsystem-Module (d.h. gemäß Beispiel die Zuführmaschine, Stanzmaschine und Auswurfmaschine), bestimmte Sicherheitsfunktionen realisieren muss. Ein solches Sicherheitssystem im Rahmen der Erfindung besitzt somit in der Regel mehrere fehlersichere Automatisierungssysteme, die in verschiedenen Teilsystem-Modulen innerhalb eines Systems, d.h. eines Gesamtsystems angeordnet sind, jedoch innerhalb des Systems zusammenwirken und übergreifend über die beteiligten Teilsystem-Module ein Sicherheitssystem ausbilden.

Eine Gesamtsicherheitsvalidierung des die beteiligten Teilsystem-Module übergreifenden Sicherheitssystems muss jedoch nicht nur bei der ersten Inbetriebnahme erfolgen.

Dies gilt ebenso für jede Änderung der Konfiguration eines modularen Sicherheitssystems, einer modularen Anlage oder Maschine. Für jede Konfiguration müssen die Kennwerte neu berechnet und dokumentiert, neue Fehlerbetrachtungen, Fehlerrechnungen und Validationsschritte zum Nachweisen der für das System oder die Maschine notwendigen Sicherheitskategorie (bzw. Sicherheitslevels), z.B. SIL4, ausgeführt werden, so z.B. beim Austausch eines einzelnen Moduls oder auch in Folge von Alterungsprozessen innerhalb einzelner Module. Dabei müssen die sicherheitsrelevanten Kennwerte der einzelnen Module entsprechend ihrem Zusammenwirken funktional kombiniert werden. Diese Kennwerte sind typischerweise in Gerätebeschreibungen dokumentiert und müssen zum Zeitpunkt der Berechnung aktuell sein. Die einschlägigen Sicherheitsnormen und Richtlinien verpflichten die Maschinenhersteller, die sicherheitsrelevanten Kennwerte wie z.B. Ausfallraten, Diagnosedeckungsgrad, SafeFailure Fraction oder Reaktionszeiten für einzelne Module anzugeben. Für die Berechnung der sicherheitsrelevanten Kennwerte werden heute Offline-Software-Tools, wie z.B. SISTEMA (Sicherheit von Steuerungen an Maschinen) vorn Institut für Arbeitsschutz der Deutschen Gesetzlichen Unfallversicherung (IFA), verwendet.

Des Weiteren muss aber auch während des Betriebs des Sicherheitssystems bzw. der sicheren Anlage oder Maschine die Funktionsfähigkeit sowie die Wirksamkeit der technischen, risikominimierenden Maßnahmen in definierten Zeitintervallen getestet werden.

Der Modularisierung von Maschinen, Anlagen oder Sicherheitssystemen sowie dynamischen Konfigurationsänderungen oder adaptiven Zusammenstellungen von vormals unbekannten Sicherheitsmodulen tragen aber die heutigen Sicherheitsstandards, wie z.B. IEC 61508,

EN 13849, IEC 62061, zumindest bisher nur teilweise Rechnung.

Ferner ist die heutige Zeit geprägt von cyber-physischen Systemen (CPS, engl. cyber physical systems), der Verteilung von Intelligenzen und dem Internet der Dinge (engl. internet of things, IoT). Unter Industrie 4.0 wird der Einzug von Internet-Technologien in die Automatisierungstechnik beschrieben. Die komplette Vernetzung intelligenter Geräte vom Sensor/Aktor bis zur Steuerung ist die Voraussetzung für Modularisierung, Wiederverwendung und Adaptionsfähigkeit von Maschinen- und Anlagenmodulen. Produktionsvorgänge können dann weiter optimiert werden und es kann z.B. in Losgrößen 1 gefertigt werden. Die Einbindung und Nutzung von Cloud-Diensten ermöglicht z.B. vorausschauende Diagnosen. All diese Trends und Technologien tragen ihrerseits zur steigenden Komplexität modularer Anlagen, Maschinen und Sicherheitssysteme sowie zum erhöhten Aufwand bei der Gesamtsicherheitsvalidierung bei.

Es versteht sich, dass dieser für die Gesamtsicherheitsvalidierung erforderliche und zunehmend höhere Aufwand nicht den Flexibilitätsanforderungen der Hersteller und Betreiber modularer Sicherheitssysteme, Anlagen und Maschinen entspricht.

Diesbezüglich schlägt die EP 2 359 201 ein Verfahren zum Bestimmen einer Sicherheitsstufe in einem Automatisierungsnetzwerk mit einer Mehrzahl von sicherheitsrelevanten Teilnehmern vor. Dieses umfasst die Schritte: selbsttätiges Ermitteln der daten- und ablauftechnischen Verknüpfungen zwischen den Teilnehmer im Automatisierungsnetzwerk durch ein Konfigurationserfassungsmodul; selbsttätiges ErmitteIn der teilnehmerspezifischen Sicherheitskenndaten durch ein Kenndatenerfassungsmodul; und Berechnen der Sicherheitsstufe in dem Automatisierungsnetzwerk mithilfe einer Berechnungsvorschrift, die die ermittelten daten- und ablauftechnischen Verknüpfungen der Teilnehmer im Automatisierungsnetzwerk und die ermittelten teilnehmerspezifischen Sicherheitskenndaten verbindet. Das Konfigurationserfassungsmodul und das Kenndatenerfassungsmodul sind dabei Teil eines zentralen Sicherheitsmanagers, der online über ein Netzwerk auf die an einer Sicherheitsfunktion beteiligten Komponenten zugreift.

Darüber hinaus schlägt die hiesige Anmelderin in deren früheren Anmeldung DE 10 2015 108 359 ein Verfahren zur automatischen Validierung von Sicherheitsfunktionen an einem modular aufgebauten Sicherheitssystem vor, wobei an das Sicherheitssystem eine auch als Safety-Validator bezeichnete zentrale Überprüfungseinrichtung angeschaltet wird. Das Verfahren umfasst u.a. die Schritte: Übertragen der lokalen, modulspezifischen sicherheitsrelevanten Ist-Kennwerte aus den einzelnen Teilsystem-Modulen an die Überprüfungseinrichtung, automatisches Verarbeiten der ausgelesenen, lokalen, modulspezifischen sicherheitsrelevanten Ist-Kennwerte zu sich beim Zusammenwirken der einzelnen Teilsystem-Module ergebenden, übergreifenden sicherheitsrelevanten Ist-Kennwerten, und zwar durch jene Überprüfungseinrichtung; automatisches Vergleichen der sich ergebenden, übergreifenden sicherheitsrelevanten Ist-Kennwerte mit den im Speicher der Überprüfungseinrichtung hinterlegten Soll-Kennwerten des Systems, und zwar durch die Überprüfungseinrichtung und automatisches Generieren eines Reaktionssignals in Abhängigkeit vom Ergebnis des Vergleiches. Somit überprüft der sogenannte Safety-Validator während der Inbetriebnahme und zur Laufzeit online sich ändernde sicherheitsrelevante Parameter von dezentralen Teilsicherheitsfunktionen, kombiniert diese, überwacht die Einhaltung vorkonfigurierter Grenzen und kann bei deren Überschreitung das System in einen sicheren Zustand überführen.

Des Weiteren schlägt die hiesige Anmelderin in deren früheren Anmeldung DE 10 2015 103 740 ein Verfahren vor zum Verarbeiten und Übertragen von Daten innerhalb eines funktional sicheren elektrischen, elektronischen oder programmierbar elektronischen Systems vor, welches aus wenigstens zwei Sub-Systemen aufgebaut wird, welche jeweils einem bestimmten Sicherheitslevel genügen. Es umfasst die Schritte: Verarbeiten von Daten mittels der sicheren Hardware- und/oder Software-Komponente eines ersten der Sub-Systeme zu funktional sicheren Daten eines ersten Sicherheitslevels und Hinzufügen zu diesen Daten wenigstens ein Kennzeichnungsattribut, welches die Eignung dieser Daten für den Einsatz dieses ersten Sicherheitslevels kennzeichnet; Übertragen dieser Daten einschließlich des hinzugefügten Kennzeichnungsattributs an ein zweites dieser Sub-Systeme; und Prüfen des empfangenen Kennzeichnungsattributs durch das zweite Sub-System mittels dessen sicherer Hardware- und/oder Software-Komponente dahingehend, ob der Sicherheitslevel, den dieses Kennzeichnungsattribut kennzeichnet, gegenüber dem Sicherheitslevel, welchem das zweite Sub-System genügt, gleich oder ungleich ist, und, wenn die Prüfung ungleiche Sicherheitslevel ergibt funktional sicheres Weiterverarbeiten der Daten basierend auf dem geringeren Sicherheitslevel.

Sowohl die EP 2 359 201 als auch die DE 10 2015 108 359 sehen eine zentrale Instanz in Form eines Sicherheitsmanagers bzw. einer Überprüfungseinrichtung vor. Dies kann jedoch zu einer Einschränkung der Flexibilität und Handhabbarkeit führen, insbesondere mit Blick auf die Überwachung der Sicherheitskette einer Gesamtsicherheitsfunktion eines Sicherheitssystems während des laufenden Betriebs. Außerdem besteht ein zusätzlicher Hardwareaufwand.

Eine wesentliche Aufgabe der vorliegenden Erfindung besteht deshalb darin, die Überwachung der Sicherheitskette einer Gesamtsicherheitsfunktion eines modularen Sicherheitssystems insbesondere während des laufenden Betriebs weiter zur vereinfachen.

Insbesondere besteht eine Aufgabe darin, eine solche vereinfachte Überwachung ohne die Nutzung einer zentralen zusätzlichen Überwachungsinstanz zu ermöglichen.

Zudem soll eine solche vereinfachte Überwachung insbesondere auch bei dynamischen und/oder sich in ihrer Konfiguration ändernden Sicherheitssystemen ermöglicht werden.

Zur Lösung schlägt die Erfindung eine Vorrichtung, welche zur Durchführung eines Verfahrens zum Überwachen der Datenverarbeitung und -übertragung in einer Sicherheitskette eines Sicherheitssystems die Merkmale des unabhängigen Patentanspruchs 1 aufweist. Eine vorteilhafte Ausgestaltung der Erfindung ist in dem abhängigen Patentanspruch 2 angegeben.

Beschrieben wird weiterhin ein Verfahren zum Überwachen einer Datenverarbeitung und -übertragung zumindest in einer Sicherheitskette eines Sicherheitssystems, wobei das Sicherheitssystem eine Gesamtsicherheitsfunktion bereitstellt und aus wenigstens zwei Teilsystem-Modulen modular aufgebaut ist, und wobei wenigstens die zwei Teilsystem-Module an einen Datenübertragungskanal angeschaltet sind und jeweils eine Teilsicherheitsfunktion bereitstellen und für eine funktional sichere Datenverarbeitung und/oder -übertragung ausgebildet sind. Das Verfahren umfasst dabei die folgenden Schritte:
- Verarbeiten von Daten durch ein erstes der Teilsystem-Module zu funktional sicheren Daten;
- Ermitteln durch dieses erste Teilsystem-Modul eines ersten Ist-Kennwertes hinsichtlich eines sicherheitsrelevanten Kennzeichnungsattributes der Datenverarbeitung und/oder -Übertragung, insbesondere für eine Gesamtreaktionszeit;
- Übertragen der funktional sicheren Daten und des ersten Ist-Kennwertes von diesem ersten Teilsystem-Modul an ein zweites der Teilsystem-Module und Empfangen der funktional sicheren Daten und des ersten Ist-Kennwertes durch dieses zweite Teilsystem-Modul;
- Ermitteln durch dieses zweite Teilsystem-Modul eines zweiten Ist-Kennwertes hinsichtlich des sicherheitsrelevanten Kennzeichnungsattributes;
- Verarbeiten des ersten Ist-Kennwertes und des zweiten Ist-Kennwertes zu einem dritten Ist-Kennwert hinsichtlich des sicherheitsrelevanten Kennzeichnungsattributes durch dieses zweite Teilsystem-Modul;
- Ermitteln durch dieses zweite Teilsystem-Modul eines Soll-Kennwertes hinsichtlich des sicherheitsrelevanten Kennzeichnungsattributes;
- Vergleichen des dritten Ist-Kennwertes mit dem Soll-Kennwert des sicherheitsrelevanten Kennzeichnungsattributes durch dieses zweite Teilsystem-Modul, und in Abhängigkeit von dem Vergleichsergebnis
   -- bei positivem Vergleichsergebnis Weiterverarbeiten und/oder Weiterübertragen der funktional sicheren Daten, oder
   -- bei negativem Vergleichsergebnis Auslösen einer vorbestimmten Sicherheitsreaktion.

Es sei darauf hingewiesen, dass der Begriff "Datenübertragungskanal" nicht zwingend das Vorhandensein eines Bussystems bedingt. Vielmehr liegen im Rahmen der Beschreibung auch Teilsystem-Module, z.B. modulare Maschinen, wobei die Module zur Datenübertragung nicht über Bussysteme miteinander vernetzt sind. Eine mögliche Alternative im Rahmen des Begriffs "Datenübertragungskanal" sind beispielsweise Teilsystem-Module, bei denen sich der "Datenübertragungskanal", an welchen diese angeschaltet sind, sich aus jeweiligen internen, miteinander verschalteten Backplanebussen zusammensetzt. Die Teilsystem-Module können somit z.B. auch modulare Geräte mit internem Backplanebus sein.

Besonders bevorzugt ist dabei vorgesehen, dass die Datenverarbeitung und -übertragung in der Sicherheitskette des Sicherheitssystems zyklisch erfolgt, und dass die Schritte des Verfahrens zyklisch ausgeführt werden.

Zweckmäßig überträgt also jedes eine Teilsicherheitsfunktion bereitstellende Teilsystem-Modul nicht nur die funktional sicheren Daten (z.B. "Not-Halt betätigt"), sondern ergänzt diese noch um weitere Informationen in Form von Ist-Kennwerten wie z.B. die eingestellte Filterzeit, die Güte des Signales, die interne Verarbeitungszeit, die Übertragungszeit, die Güte der Übertragung, den eigenen Anteil vom SIL, hinsichtlich sicherheitsrelevanter Kennzeichnungsattribute wie z.B. den verbleibenden SIL-Anteil, das Alter bzw. die Aktualität des Signals bzw. der Daten oder die Gesamtreaktionszeit, wobei diese zusätzlichen Informationen von einem in der Sicherheitskette nachfolgenden eine Teilsicherheitsfunktion bereitstellenden Teilsystem-Modul empfangen, verarbeitet und ausgewertet bzw. mit Soll-Kennwerten verglichen werden, etwa daraufhin, ob die Daten nicht schon zu alt sind oder nicht schon zu viel vom SIL verbraucht ist.

Hierin besteht auch ein wesentlicher Unterschied der Erfindung gegenüber der eingangs erwähnten DE 10 2015 103 740, gemäß welcher lediglich vorgesehen ist, dass ein Teilsystem-Modul seinen eigenen SIL-Kennwert zusammen mit funktional sicheren Daten an ein nächstes Teilsystem-Modul, welches den empfangenen SIL-Kennwert mit dem eigenen SIL-Kennwert vergleicht und die funktional sicheren Daten zusammen mit dem geringeren SIL-Kennwert weiter überträgt. Hingegen ist vorgesehen, dass ein Teilsystem-Modul, dass zusammen mit funktional sicheren Daten einen Ist-Kennwert hinsichtlich eines sicherheitsrelevanten Kennzeichnungsattributs der Datenübertragung und/oder -verarbeitung empfängt, den empfangenen Ist-Kennwert mit einem weiteren Ist-Kennwert, den das empfangende Teilsystem-Modul selbst ermittelt, verarbeitet bzw. verrechnet, um dann den berechneten Ist-Kennwert mit einem Soll-Kennwert zu vergleichen und je nach Vergleichsergebnis eine Sicherheitsreaktion wie z.B. Abschalten eines Kanals oder eines Modul, auszulösen oder eine Weiterverarbeitung und/oder -übertragung unter Verwendung der empfangenen funktional sicheren Daten und des berechneten Ist-Kennwertes vorzunehmen.

Die vorliegende Erfindung bietet viele Vorteile. Vor allem ermöglicht sie auf einfache Weise die permanente Überwachung der Sicherheitskette in einem modularen Sicherheitssystems während des laufenden Betriebs, und zwar ohne dass hierfür eine zusätzliche Hardware an zentraler Stelle erforderlich ist.

Die Erfindung trägt damit wesentlich zur Flexibilisierung modularer Sicherheitssysteme bei, da nicht jede neue bzw. geänderte Konfiguration vorab neu sicherheitstechnisch berechnet werden muss. Hier stellt die Erfindung sicher, dass z.B. durch eine geänderte Konfiguration die benötigten sicherheitsrelevanten Kennwerte aus der ursprünglichen Risikobewertung bzw. Sicherheitsvalidierung der Maschine oder Anlage weiterhin eingehalten werden, ohne dass eine erneute Sicherheitsbetrachtung durchgeführt werden muss. Dies vereinfacht speziell bei modularen Maschinen oder Anlagen die Planung für den Maschinenbauer und den Betrieb im Produktiveinsatz.

Daneben funktioniert die erfindungsgemäße Überwachung weiterhin auch in "statischen" Sicherheitssystemen, Anlagen oder Maschinen, die eine "statische" Konfiguration der Gesamtsicherheitsfunktion aufweisen. Dort bietet sie dem Betreiber z.B. den Vorteil, dass auch eine schleichende Verschlechterung der Datenverarbeitung und/oder - übertragung erkannt werden würde und somit die Qualität und Sicherheit der Datenverarbeitung und -übertragung immer innerhalb der erforderlichen bzw. parametrierten Grenzen bleiben.

Von Vorteil ist ferner, dass das Verfahren zyklisch durchgeführt werden kann, so dass mit jedem neuen Kommunikations- bzw. Datenübertragungszyklus die Datenverarbeitung und -übertragung innerhalb der Sicherheitskette hinsichtlich wenigstens eines, bevorzugt aber einer Vielzahl von sicherheitsrelevanten Kennzeichnungsattributen überwacht werden kann.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigt dabei
- Fig. 1: eine schematische Darstellung eines modularen Sicherheitssystems in Form einer Maschine mit drei Teilsystem-Modulen, und
- Fig. 2: eine schematische Darstellung eines Sicherheitssystems mit drei Teilsystem-Modulen in Form von drei Maschinen.

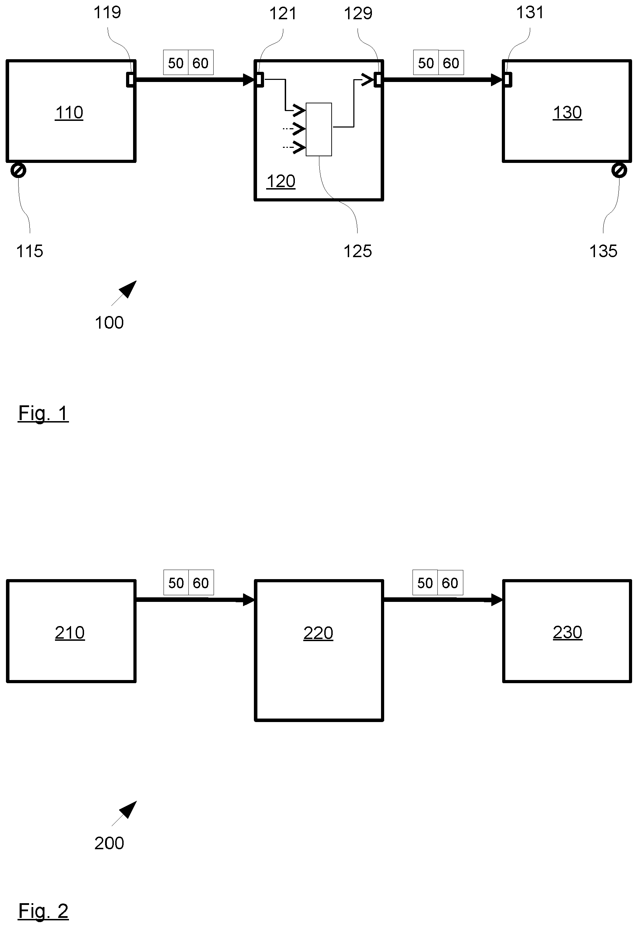

Die Figur 1 zeigt eine schematische Darstellung eines modularen Sicherheitssystems 100 in Form einer Maschine mit drei Teilsystem-Modulen 110, 120 und 130, die jeweils eine Teilsicherheitsfunktion bereitstellen, die zusammen die Gesamtsicherheitsfunktion "Not-Halt der Maschine" bilden. Das Teilsystem-Modul 110 ist dabei als sicheres Eingangsmodul, das Teilsystem-Modul 120 als sicheres Logikmodul und das Teilsystem-Modul 130 als sicheres Ausgangsmodul ausgebildet, die jeweils an einen nicht dargestellten Datenübertragungskanal, z.B. an einen Feldbus oder an jeweilige interne, miteinander verschaltete Backplanebusse, angeschaltet sind und darüber miteinander kommunizieren können. Ferner sind diese drei Teilsystem-Module für eine funktional sichere Datenverarbeitung und Datenübertragung ausgebildet. Hierfür verfügen sie über sichere Hardware- und/oder Softwarekomponenten 115, 119, 121, 125, 129, 131 und 135. Dabei handelt es sich zweckmäßig um sichere Datenübertragungskomponenten 119 und 129, sichere Datenempfangskomponenten 121 und 131, eine als Eingangsklemme ausgebildete sichere Eingangskomponente 115, eine sichere Logikkomponente 125 sowie eine als Ausgangsklemme ausgebildete sichere Ausgangskomponente 135. Es sei hier angemerkt, dass jedes der Teilsystem-Module sowohl über eine Datenübertragungs- als auch über eine Datenempfangskomponente verfügen kann, so dass eine bidirektionale Datenübertragung möglich ist. Für eine bessere Übersichtlichkeit sind jedoch nicht alle diese Komponenten in der Figur dargestellt.

Die Sicherheitskette beginnt hierbei an der Eingangsklemme am sicheren Eingangsmodul 110 und endet an der Ausgangsklemme am sicheren Ausgangsmodul 130. Ein Sensor, z.B. in Form eines Not-Aus-Tasters, an der Eingangsklemme 115 und ein Aktor, z.B. in Form eines Schützes, an der Ausgangsklemme 135 werden hierbei jedoch nicht als Teil der Sicherheitskette betrachtet und sind auch nicht dargestellt. Die erfindungsgemäße Überwachung der Datenverarbeitung und -übertragung in der Sicherheitskette, welche nun näher erläutert wird, reicht demnach im Falle der Fig. 1 von der Eingangskomponente 115 bis zur Ausgangskomponente 135.

Alle beteiligten Teilsystem-Module 110, 120 und 130 kennen u.a. ihren Anteil, welchen sie vom SIL des Sicherheitssystems 100 "verbrauchen" sowie ihre eigene interne Verarbeitungszeit. Das sichere Logikmodul 120 und das sichere Ausgangsmodul 130 kennen zusätzlich noch die Zykluszeit des Datenübertragungskanals. Der verbleibende SIL-Anteil sowie das Alter des Signals bzw. der Daten stellen sicherheitsrelevante Kennzeichnungsattribute dar, deren zugehörige Kennwerte 60 ermittelt, übertragen, verarbeitet und ausgewertet bzw. verglichen werden, um die Datenverarbeitung und -überwachung in der Sicherheitskette des modular aufgebauten Sicherheitssystems 100 zu überwachen.

Das sichere Eingangsmodul 110 erfasst und verarbeitet mittels einer Firmwarekomponente, die nicht dargestellt ist, den Status bzw. Pegel der Eingangskomponente 115 und erzeugt aus diesem Eingangswert funktional sichere Daten 50.

Zusätzlich ermittelt das sichere Eingangsmodul, z.B. ebenfalls mittels seiner Firmwarekomponente, zwei erste Ist-Kennwerte 60 hinsichtlich der sicherheitsrelevanten Kennzeichnungsattribute verbleibender SIL-Anteil sowie Alter der Daten. Seinen eigenen Anteil vom SIL von -1% sowie die Filterzeit von 10 ms liest das sichere Eingangsmodul 110 aus einer Speicherkomponente aus, die in der Figur nicht dargestellt ist, während es die eigene Verarbeitungszeit von 4ms messtechnisch erfasst. Das sichere Eingangsmodul 110 ermittelt demnach als Ist-Kennwert für den verbleibenden SIL-Anteil 100% - 1% = 99% (entspricht dem Anteil vom SIL welcher nach Bearbeitung im Teilsystem-Modul noch vorhanden ist), und als Alter der Daten 10ms + 4ms = 14ms (entspricht der Verzögerung im Teilsystem-Modul). Diese beiden ersten Ist-Kennwerte 60 sowie die funktional sicheren Daten 50 überträgt das sichere Eingangmodul 110 mittels seiner Datenübertragungskomporiente 119 an das nächste Teilsystem-Modul 120. Diese Datenübertragung ist in der Figur dargestellt durch den Pfeil zwischen den Teilsystem-Modulen 110 und 120.

Das Teilsystem-Modul 120, d.h. bei Fig. 1 das sichere Logikmodul, nimmt den übertragenen Datensatz aus funktional sicheren Daten 50 und den zusätzlichen ersten Ist-Kennwerten 60 mittels seiner Datenempfangskomponente 121 in Empfang.

Zudem ermittelt das sichere Logikmodul 120 mittels seiner Logikkomponente 125 zwei zweite Ist-Kennwerte hinsichtlich der sicherheitsrelevanten Kennzeichnungsattribute verbleibender SIL-Anteil sowie Alter der Daten. Den Anteil des Datenübertragungskanals vom SIL von -1% liest das sichere Logikmodul 120 aus einer Speicherkomponente aus, die in der Figur nicht dargestellt ist, während es die Übertragungszeit bzw. Buszykluszeit von 20ms messtechnisch erfasst. Das sichere Logikmodul 120 verarbeitet dann die empfangenen ersten Ist-Kennwerte 60 mit den ermittelten zweiten Ist-Kennwerten zu zwei dritten Ist-Kennwerten und ermittelt dabei als Ist-Kennwert für den verbleibenden SIL-Anteil 99% - 1% = 98%, und als Alter der Daten 14ms + 20ms = 34ms. Diese beiden dritten Ist-Kennwerte vergleicht das sichere Logikmodul 120 mittels seiner Logikkomponente 125 mit zwei aus einer nicht dargestellten Speicherkomponente ausgelesenen Soll-Kennwerten, die hinsichtlich der sicherheitsrelevanten Kennzeichnungsattribute verbleibender SIL-Anteil sowie Alter der Daten parametriert wurden. Sollte bei zumindest einem der sicherheitsrelevanten Kennzeichnungsattribute der dritte Ist-Kennwert von dem zugehörigen Soll-Kennwert abweichen oder zumindest um mehr als einen parametrierten Schwellwert abweichen, wird eine vorbestimmte Sicherheitsreaktion ausgelöst. D.h. bei einem negativen Vergleichsergebnis, werden die übertragenen Daten 50 nicht weiterverarbeitet, da sie z.B. aufgrund einer Störung in der Kommunikation zu alt sind. Bevorzugt wird dann für den Betreiber des Sicherheitssystems 100 eine Fehlermeldung generiert.

Bei einem positiven Vergleichsergebnis, d.h. liegt keine Abweichung von dem zugehörigen Soll-Kennwert oder maximal eine kleinere als der parametrierte Schwellwert vor, können die übertragenen funktional sicheren Daten 50 vom sicheren Logikmodul 120 mittels dessen Logikkomponente 125 weiterverarbeitet und dann für die Weiterübertragung bereitgestellt werden.

Zusätzlich ermittelt das sichere Logikmodul 120 zwei vierte Ist-Kennwerte hinsichtlich der sicherheitsrelevanten Kennzeichnungsattribute verbleibender SIL-Anteil sowie Alter der Daten. Seinen eigenen Anteil vom SIL von -1% liest es aus einer Speicherkomponente aus, die in der Figur nicht dargestellt ist, während es die eigene Verarbeitungszeit von 3ms messtechnisch erfasst. Das sichere Logikmodul 120 verarbeitet dann die dritten Ist-Kennwerte mit den ermittelten vierten Ist-Kennwerten zu zwei fünften Ist-Kennwerten und ermittelt dabei als Ist-Kennwert für den verbleibenden SIL-Anteil 98% - 1% = 97%, und als Alter der Daten 34ms + 3ms = 37ms. Diese beiden fünften Ist-Kennwerte stellt es dann wie zwei erste Ist-Kennwerte 60 für die Weiterübertragung bereit. Mittels seiner Datenübertragungskomponente 129 überträgt das sichere Logikmodul 120 die beiden ersten Ist-Kennwerte 60 sowie die funktional sicheren Daten 50 an das nächste Teilsystem-Modul 130. Diese Datenübertragung ist in der Figur dargestellt durch den Pfeil zwischen den Teilsystem-Modulen 120 und 130.

Das Teilsystem-Modul 130, d.h. das sichere Ausgangsmodul, nimmt den übertragenen Datensatz aus funktional sicheren Daten 50 und den zusätzlichen ersten Ist-Kennwerten 60 mittels seiner Datenempfangskomponente 131 in Empfang.

Zudem ermittelt das sichere Ausgangsmodul, z.B. mittels seiner Firmwarekomponente, die nicht dargestellt ist, zwei zweite Ist-Kennwerte hinsichtlich der sicherheitsrelevanten Kennzeichnungsattribute verbleibender SIL-Anteil sowie Alter der Daten. Den Anteil des Datenübertragungskanals vom SIL von -1% liest das sichere Ausgangsmodul 130 aus einer Speicherkomponente aus, die in der Figur nicht dargestellt ist, während es die Übertragungszeit bzw. Buszykluszeit von 15ms messtechnisch erfasst. Das sichere Ausgangsmodul 130 verarbeitet dann die empfangenen ersten Ist-Kennwerte 60 mit den ermittelten zweiten Ist-Kennwerten zu zwei dritten Ist-Kennwerten und ermittelt dabei als Ist-Kennwert für den verbleibenden SIL-Anteil 97% - 1% = 96%, und als Alter der Daten 37ms + 15ms = 52ms. Diese beiden dritten Ist-Kennwerte vergleicht das sichere Ausgangsmodul 130, z.B. mittels seiner Firmwarekomponente, mit zwei aus einer nicht dargestellten Speicherkomponente ausgelesenen Soll-Kennwerten, die hinsichtlich der sicherheitsrelevanten Kennzeichnungsattribute verbleibender SIL-Anteil sowie Alter der Daten parametriert wurden. Sollte bei zumindest einem der sicherheitsrelevanten Kennzeichnungsattribute der dritte Ist-Kennwert von dem zugehörigen Soll-Kennwert abweichen oder zumindest um mehr als einen parametrierten Schwellwert abweichen, wird eine vorbestimmte Sicherheitsreaktion ausgelöst. D.h. bei einem negativen Vergleichsergebnis, werden die übertragenen Daten 50 nicht weiterverarbeitet.

Bei einem positiven Vergleichsergebnis, d.h. wenn das Alter des Signals und der verbliebene Anteil vom SIL innerhalb der parametrierten Grenzen liegen, können die übertragenen funktional sicheren Daten 50 vom sicheren Ausgangsmodul 130 mittels dessen Firmwarekomponente zu einem Ausgangssignal weiterverarbeitet und dieses dann an der Ausgangsklemme 135 ausgegeben werden.

Dank der Erfindung wäre es nun möglich, z.B. das Teilsystem-Modul 110 durch ein neues bzw. anderes Teilsystem-Modul zu ersetzen, ohne dass diese geänderte Konfiguration des Sicherheitssystems 100 dessen Sicherheit beeinträchtigen und eine neue Sicherheitsbetrachtung erforderlich werden würde. Sollte das neue Teilsystem-Modul 110 z.B. einen größeren Anteil vom SIL "verbrauchen" oder eine längere Filterzeit oder Verarbeitungszeit aufweisen als das ersetzte Teilsystem-Modul würde das Teilsystem-Modul 120 oder 130 gegebenenfalls eine Sicherheitsreaktion auslösen, sofern die parametrierten Soll-Kennwerte hinsichtlich der sicherheitsrelevanten Kennzeichnungsattribute verbleibender SIL-Anteil sowie Alter der Daten nicht mehr eingehalten werden. Dieser wesentliche Vorteil käme ebenfalls zum Tragen, wenn in das Sicherheitssystem 100 ein zusätzliches Teilsystem-Modul, z.B. ein als Gateway ausgebildetes Koppelmodul, eingefügt werden würde.

In einer nicht dargestellten Abwandlung des in Figur 1 dargestellten Beispiels kann auch vorgesehen sein, dass in einem Teilsystem-Modul wie z.B. dem sicheren Logikmodul zwar eine Verarbeitung bzw. Verrechnung von empfangenen und ermittelten Ist-Kennwerten jedoch kein Vergleich mit Soll-Kennwerten erfolgt. Es wird dann lediglich der berechnete Ist-Kennwert sowie die funktional sicheren Daten an das nächste Teilsystem-Modul weiter übertragen.

Die Figur 2 zeigt eine schematische Darstellung eines modularen Sicherheitssystems 200 mit drei Teilsystem-Modulen 210, 220 und 230 in Form von drei Maschinen. Dieses Sicherheitssystem 200 stellt als Gesamtsicherheitsfunktion z.B. einen "Maschinenübergreifenden Not-Halt" bereit. Die Maschinen 210, 220 und 230 sind jeweils an einen nicht dargestellten Datenübertragungskanal angeschaltet und können darüber miteinander kommunizieren, wobei aus Vereinfachungsgründen wieder lediglich eine Kommunikationsrichtung durch die Pfeile zwischen den Maschinen 210 und 220 bzw. 220 und 230 dargestellt ist, selbstverständlich funktioniert das Verfahren aber auch bidirektional. Die Gesamtsicherheitsfunktion "Maschinenübergreifender Not-Halt" bedeutet, dass wenn in Maschine 210 eine Sicherheitsanforderung ausgelöst wird, diese auch auf Maschine 230 wirken muss.

Die funktional sichere Verarbeitung und Übertragung von Daten innerhalb der von Maschine 210 bis Maschine 230 reichenden Sicherheitskette sowie deren Überwachung funktioniert dabei analog zu dem zuvor beschriebenen und in Figur 1 dargestellten Ausführungsbeispiel. Auch in dem Beispiel gemäß Figur 2 überträgt die Maschine 210 bzw. 220 funktional sichere Daten 50 und zusätzlich wenigstens einen ersten Ist-Kennwert 60 hinsichtlich eines sicherheitsrelevanten Kennzeichnungsattributes der Datenverarbeitung und/oder -übertragung an die Maschine 220 bzw. 230. Es versteht sich, dass dabei die Ist- und Soll-Kennwerte hinsichtlich der sicherheitsrelevanten Kennzeichnungsattribute verbleibender SIL-Anteil sowie Alter der Daten sich von den im ersten Ausführungsbeispiel genannten Kennwerten unterscheiden können. Alternativ oder ergänzend können auch andere sicherheitsrelevanten Kennzeichnungsattribute bestimmt sein.

### Bezugszeichenliste

- 50: funktional sichere Daten
- 60: Ist-Kennwert(e)
- 100: Sicherheitssystem
- 110: Teilsystem-Modul, sicheres Eingangsmodul
- 115: Eingangskomponente, Eingangsklemme
- 119: Datenübertragungskomponente
- 120: Teilsystem-Modul, sicheres Logikmodul
- 121: Datenempfangskomponente
- 125: Logikkomponente
- 129: Datenübertragungskomponente
- 130: Teilsystem-Modul, sicheres Ausgangsmodul
- 131: Datenempfangskomponente
- 135: Ausgangskomponente, Ausgangsklemme
- 200: Sicherheitssystem
- 210: Teilsystem-Modul, Maschine
- 220: Teilsystem-Modul, Maschine
- 230: Teilsystem-Modul, Maschine

## Patentansprüche

1. Vorrichtung (120, 130), welche zur Durchführung eines Verfahrens zum Überwachen der Datenverarbeitung und - übertragung in einer Sicherheitskette eines Sicherheitssystems (100, 200) sichere Hardware- und/oder Software-Komponenten (121, 125, 129, 131) umfasst, die für eine funktional sichere Datenverarbeitung und/oder -übertragung ausgebildet sind, und **dadurch gekennzeichnet ist,**
**dass** die sicheren Hardware- und/oder Software-Komponenten dazu eingerichtet sind,
- von einer weiteren Vorrichtung des Sicherheitssystems übertragene funktional sichere Daten (50) und einen ersten Ist-Kennwert (60) hinsichtlich eines sicherheitsrelevanten Kennzeichnungsattributes der Datenverarbeitung und/oder -übertragung zu empfangen;
- einen zweiten Ist-Kennwert hinsichtlich des sicherheitsrelevanten Kennzeichnungsattributes zu ermitteln;
- den ersten Ist-Kennwert und den zweiten Ist-Kennwert zu einem dritten Ist-Kennwert hinsichtlich des sicherheitsrelevanten Kennzeichnungsattributes zu verarbeiten;
- einen Soll-Kennwertes hinsichtlich des sicherheitsrelevanten Kennzeichnungsattributes zu ermitteln;
- den dritten Ist-Kennwertes mit dem Soll-Kennwert des sicherheitsrelevanten Kennzeichnungsattributes zu vergleichen; und
- in Abhängigkeit von dem Vergleichsergebnis
-- bei positivem Vergleichsergebnis die funktional sicheren Daten weiter zu verarbeiten und/oder weiter zu übertragen, oder
-- bei negativem Vergleichsergebnis eine vorbestimmte Sicherheitsreaktion auszulösen.

2. Vorrichtung nach dem vorherigen Anspruch, wobei diese als ein sicheres Ausgangsmodul (130), ein sicheres SPS-Modul, ein sicheres Logikmodul (120) oder ein sicheres Koppelmodul ausgebildet ist.

## Claims

1. Device (120,130) comprising safe hardware and/or software components (121, 125, 129, 131) adapted for functionally safe data processing and/or transmission for performing a method for monitoring data processing and transmission in a safety chain of a safety system (100, 200), and **characterized in that** the safe hardware and/or software components are adapted for,
- receiving functionally safe data (50) transmitted by a further device of the safety system and a first actual characteristic value (60) with respect to a safety -relevant characterizing attribute of the data processing and/or transmission;
- determining a second actual characteristic value with regard to the safety-relevant characterizing attribute;
- processing the first actual characteristic value and the second actual characteristic value into a third actual characteristic value with regard to the safety-relevant characterizing attribute;
- determining a nominal characteristic value for the safety-relevant characterizing attribute;
- comparing the third actual characteristic value with the nominal characteristic value of the safety-relevant characterizing attribute; and
- depending on the comparison result
-- further processing and/or further transmitting the functionally safe data if the result of the comparison is positive, or
-- triggering a predetermined safety reaction if the result of the comparison is negative.

2. Device according to the previous claim, wherein it is formed as a safe output module (130), a safe SPS-module, a safe logic module (120) or a safe coupling module.

## Revendications

1. Dispositif (120, 130), lequel comprend, pour la réalisation d'un procédé de surveillance du traitement et de la transmission de données dans une chaîne de sécurité d'un système de sécurité (100, 200), des composants matériels et/ou logiciels (121, 125, 129, 131) sécurisés qui sont conçus pour un traitement et/ou une transmission sécurisé(e) fonctionnel(le) de données, et **caractérisé en ce que** les composants matériels et/ou logiciels sécurisés sont installés pour
- recevoir des données (50) sécurisées fonctionnelles transmises par un autre dispositif du système de sécurité et une première valeur caractéristique réelle (60) concernant un attribut d'identification lié à la sécurité du traitement et/ou de la transmission de données ;
- établir une deuxième valeur caractéristique réelle concernant l'attribut d'identification lié à la sécurité ;
- traiter la première valeur caractéristique réelle et la deuxième valeur caractéristique réelle pour en faire une troisième valeur caractéristique réelle concernant l'attribut d'identification lié à la sécurité ;
- établir une valeur caractéristique de consigne concernant l'attribut d'identification lié à la sécurité ;
- comparer la troisième valeur caractéristique réelle à la valeur caractéristique de consigne de l'attribut d'identification lié à la sécurité ; et
- en fonction du résultat de comparaison
-- en cas de résultat de comparaison positif, continuer à traiter et/ou continuer à transmettre les données de sécurité fonctionnelles, ou
-- en cas de résultat de comparaison négatif, déclencher une action de sécurité prédéterminée.

2. Dispositif selon la revendication précédente, celui-ci étant conçu en tant que module de sortie (130) sécurisé, module SPS sécurisé, module logique (120) sécurisé ou module de couplage sécurisé.
